Europäisches Patentamt

European Patent Office

Office européen des brevets

(11) Veröffentlichungsnummer: **0 014 369**
**B1**

# (12) EUROPÄISCHE PATENTSCHRIFT

(45) Veröffentlichungstag der Patentschrift:
30.12.81

(51) Int. Cl.³: **B 60 T 13/68**, G 05 D 16/20

(21) Anmeldenummer: 80100278.3

(22) Anmeldetag: 21.01.80

(54) **Bremsdruckregler für pneumatische Bremsen von Fahrzeugen, insbesondere von Schienenfahrzeugen.**

(30) Priorität: 22.01.79 DE 2902337

(43) Veröffentlichungstag der Anmeldung:
20.08.80 Patentblatt 80/17

(45) Bekanntmachung des Hinweises auf die Patenterteilung:
30.12.81 Patentblatt 81/52

(84) Benannte Vertragsstaaten:
CH DE FR GB

(56) Entgegenhaltungen:
DE-A1-2 508 409
DE-A1-2 811 345
FR-A1-2 293 736
US-A-3 807 810

(73) Patentinhaber: Knorr-Bremse GmbH, Moosacher Strasse 80, D-8000 München 40 (DE)

(72) Erfinder: Kupfer, Hans-Jürgen, Am Stutenanger 11c, D-8042 Oberschleissheim (DE)
Erfinder: Rau, Joachim, Wurzgartenweg 13, D-8000 München 45 (DE)
Erfinder: Kessel, Gerd, Dr., Parksiedlung 8, D-8031 Geiselbullach (DE)
Erfinder: Kümmeke, Heinrich, Herzog-Arnulf-Strasse 39, D-8011 Zorneding (DE)

ACTORUM AG.

## Bremsdruckregler für pneumatische Bremsen von Fahrzeugen, insbesondere von Schienenfahrzeugen

Die Erfindung betrifft einen Bremsdruckregler der im Oberbegriff des Patentanspruches 1 genannten Art.

Derartige Bremsdruckregler sind, z.B. aus den DE-C-1 160 491, 1 100 672, den US-A-3 398 993, 3 402 972 oder 3 807 810 bekannt geworden.

Allen diesen Bremsdruckreglern ist gemeinsam, dass der gewünschte Druck durch vollständiges Öffnen oder Schliessen von Einlass- bzw. Auslassmagnetventilen eingestellt wird. Hierdurch sind der Genauigkeit der Regelung feste Grenzen gesetzt. Zur Vermeidung eines zu häufigen Schaltens der Ventile und damit zur Verringerung des Luftverbrauches wird bei derartigen Bremsdruckreglern darüber hinaus die Schalthysterese verhältnismässig hoch gewählt, so dass die Regelgenauigkeit noch weiter verringert wird.

Beim Bremsdruckregler nach der US-A-3 807 810 wird zur Verbesserung der Regelgenauigkeit der Hauptdruck durch ein fluidgesteuertes Proportional-Druckregelventil eingestellt, dessen Steuerdruck durch Öffnen und Schliessen von Pilot-Magnetventilen bestimmt wird.

Es ist auch bekannt, Magnetventile von Bremsdruckreglern impulsförmig anzusteuern (FR-A1-2 293 731 und DE-A-1 914 765). Die Frequenz der Steuerimpulse ist dabei jedoch kleiner als die Grenzfrequenz des angesteuerten Ventils. Eine Zwischenstellung des Magnetventils ist somit nicht vorgesehen.

Aufgabe der Erfindung ist es daher, einen Bremsdruckregler der eingangs genannten Art zu schaffen, der eine sehr genaue Erreichung eines vorgegebenen Druckes ermöglicht. Weiterhin soll ein durch den Regelvorgang bedingter Luftverbrauch weitestgehend vermieden werden.

Diese Aufgabe wird durch die im Anspruch 1 angegebenen Merkmale gelöst.

Vorteilhafte Ausgestaltungen und Weiterbildungen der Erfindung sind in den Unteransprüchen angegeben.

Der Erfindung liegt der Gedanke zugrunde, ein herkömmliches Bremsmagnetventil so anzusteuern, dass es nicht nur – wie beim bekannten Stand der Technik – in einem Auf/Zu – Betrieb verwendet wird, sondern mit einem kontinuierlich veränderbaren Öffnungsquerschnitt. Die Ansteuerung des Magnetventils erfolgt dabei derart, dass innerhalb eines bestimmten Bereiches die möglichen Ventilöffnungsstellungen jeweils stabil sind und auch bei mechanischen Erschütterungen stabil bleiben.

Mit anderen Worten ausgedrückt wird bei dem erfindungsgemässen Bremsdruckregler das Magnetventil (bzw. die Ventile) als stetig steuerbare Drosselstelle verwendet.

Hierdurch wird in vorteilhafter Weise eine sehr feinfühlig ansprechende und den vorgegebenen Druck-Sollwert sehr genau erreichende Druckregelung erzielt. Je näher der Druck-Istwert dem Druck-Sollwert kommt, desto kleiner wird der Öffnungsquerschnitt des Ein- bzw. Auslassventils, so dass der Druck-Istwert sich stetig verlangsamend dem Druck-Sollwert nähert und praktisch ein (luftverbrauchendes) Überschwingen vermieden wird.

Ein weiterer Vorteil liegt darin, dass sich das Ventil während des Regelvorganges sozusagen in einem schwebenden Öffnungszustand befindet und daher ein geringerer Verschleiss des Ventilsitzes und des Ventilstössels auftritt als bei der bisherigen Regelung, bei der das Ventil jeweils vollständig offen oder vollständig geschlossen ist.

Gemäss vorteilhaften Ausgestaltungen der Erfindung kann das Ventil mit einer Gleichspannung oder einer hochfrequenten Wechselspannung angesteuert werden, wobei die Frequenz der vorzugsweise impulsförmigen Wechselspannung so gewählt ist, dass das Ventil aufgrund seiner Trägheit nicht voll durchschaltet. Die Frequenz der Ventilbetätigungssignale liegt daher erheblich höher als die maximale Schaltfrequenz des Ventils.

Bei einer bestimmten Ventilbauart wurde eine Ventil-Steuersignal-Frequenz von 1 kHz als günstig ermittelt.

Die hochfrequente Ventilansteuerung kann gemäss zweier vorteilhafter Ausgestaltungen der Erfindung einmal dadurch geschehen, dass dem Druck-Sollwert ein hochfrequentes Signal, das z.B. sägezahnförmig ist, überlagert wird und zum anderen dadurch, dass ein der Regelabweichung proportionales Signal in einem Chopper-Verstärker in ein hochfrequentes Ventilbetätigungssignal umgewandelt wird, dessen Frequenz und/oder Tastverhältnis so gewählt ist, dass der arithmetische Mittelwert des Ventilbetätigungssignales der Regelabweichung oder dem Reglerausgangssignal proportional ist. Bei konstanter Frequenz kann hierbei nur das Tastverhältnis geändert werden. Es kann aber auch die Frequenz zusammen mit dem Tastverhältnis geändert werden.

Da wie weiter unten erläutert wird, der «stetige Bereich» der Ventile klein ist und dazu noch dessen Lage aufgrund baulicher Toleranzen stark schwanken kann, wird gemäss einer vorteilhaften Weiterbildung der Erfindung ein Regler mit starkem Integral-Anteil, z.B. ein PI-Regler verwendet, wodurch das Reglerausgangssignal selbsttätig den «stetigen» Bereich des Ventiles «findet», durch Ausgleichen der Nullpunktverschiebung dieses Bereiches.

Als weiterer Vorteil ist anzuführen, dass bei dem erfindungsgemässen Regler keine «bleibenden Regelabweichungen» auftreten und dass ein «Schalten» der Ventile nur bei sehr grossen Regelabweichungen oder aufgrund des Integralanteiles des Reglers bei länger anhaltenden Regelabweichungen auftritt. Druckänderungen durch thermische Effekte, die nach schnellen Druckänderungen auftreten, werden dagegen ohne «Ventilschalten» ausgeglichen

Schliesslich ist bei einem Ausführungsbeispiel der Erfindung dafür Sorge getragen, dass ein gleichzeitiges Arbeiten von Einlass- und Auslassventil nicht auftreten kann, wodurch ein unnötiger Luftverbrauch vermieden wird.

Weitere Vorteile der Erfindung können der nachfolgenden Beschreibung entnommen werden, in der die Erfindung anhand von Ausführungsbeispielen im Zusammenhang mit den Figuren ausführlicher erläutert wird.

Es zeigt:

Fig. 1 ein schematisches Diagramm der Öffnung eines Bremsdruck-Steuer-Ventils in Abhängigkeit von dessen angelegter Steuerspannung,

Fig. 2 ein schematisches Blockschaltbild eines Bremsdruckreglers gemäss der Erfindung,

Fig. 3 ein detaillierteres Schaltbild einer Ausführungsform der Erfindung,

Fig. 4 einen schematischen Spannungsverlauf einzelner Signale des Ausführungsbeispieles gemäss Fig. 3,

Fig. 5 ein Blockschaltbild einer weiteren Ausführungsform der Erfindung,

Fig. 6 einen schematischen Spannungsverlauf einzelner Signale des Ausführungsbeispieles gemäss Fig. 5.

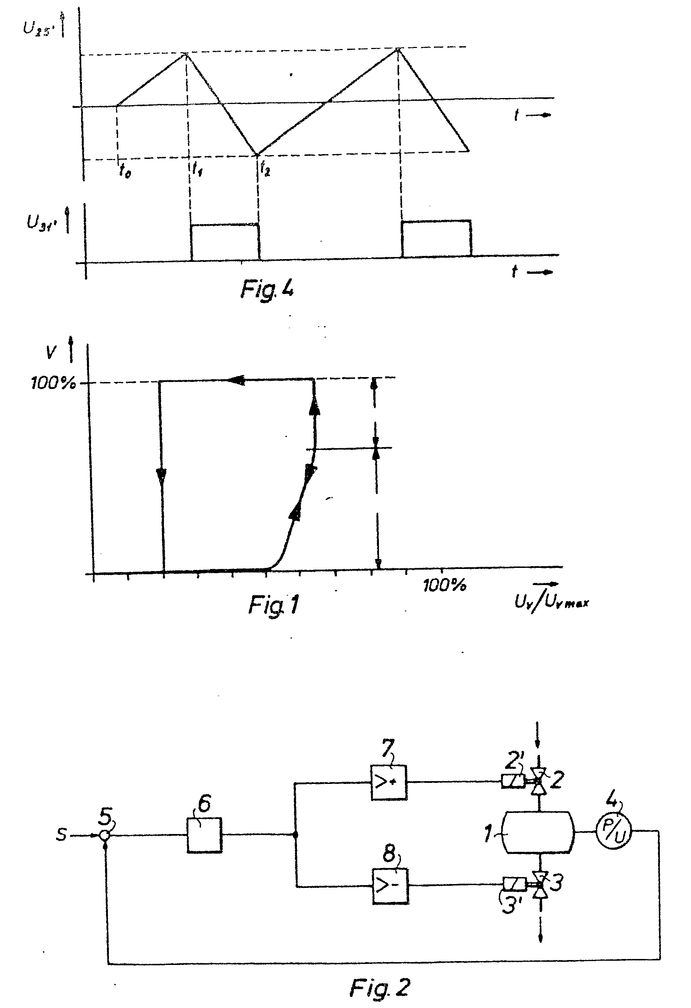

In Fig. 1 ist die Öffnung V eines Bremsdruck-Steuer-Ventils (in %) über einer an das Ventil angelegten (normierten) Spannung $U_v/U_{vmax}$ dargestellt. Es ist ersichtlich, dass die Ventilöffnung innerhalb eines engen Spannungsbereiches einen stetigen Bereich durchläuft, der in einen instabilen Bereich mündet, in dem ein Schalten des Ventiles auftritt. Es sei angemerkt, dass dieser «stetige Bereich» stabil ist und in beiden Richtungen durch Vergrössern oder Verkleinern der an das Ventil angelegten Spannung durchfahren werden kann. Auch bei mechanischen Erschütterungen, wie sie z.B. in Fahrzeugen auftreten, wird das Ventil im wesentlichen in dem stetigen Bereich verharren.

Wird die angelegte Spannung über den stetigen Bereich hinaus erhöht, so schaltet das Ventil durch und öffnet vollständig. Bei einer anschliessenden Absenkung der angelegten Spannung durchläuft das Ventil die dargestellte Hysteresekurve und schliesst bei Erreichen einer Mindesthaltespannung vollständig. Es ist ersichtlich, dass der stetige Bereich also nur aus einer Schliessstellung des Ventiles erreicht werden kann.

Bei einem in der Praxis verwendeten Ventil beginnt der stetige Bereich etwa bei 60% der Ventilnennspannung und endet bei etwa 75%. Wird die angelegte Spannung von Null beginnend erhöht, so bleibt das Ventil bis zum Erreichen der obigen 60% vollständig geschlossen.

Es sei bemerkt dass diese «Nullpunktverschiebung» des stetigen Bereiches im wesentlichen von der Ventilbauart, zusätzlich auch von thermischen Einflüssen und von Fertigungstoleranzen beeinflusst wird. Ebenso hängt der Verlauf des stetigen Bereiches von diesen Parametern ab.

Fig. 2 zeigt ein schematisches Blockschaltbild eines Bremsdruckreglers gemäss der Erfindung. Ein Druckbehälter 1, dessen Druck geregelt werden soll ist über ein Einlassmagnetventil 2 mit zugehöriger Magnetspule 2' mit einer (nicht dargestellten) Druckluftquelle und über ein Auslassmagnetventil 3 mit zugehöriger Magnetspule 3' mit einer (ebenfalls nicht dargestellten) Druckluftsenke, w.z.B. Atmosphäre, verbunden. Der Druck in dem Druckbehälter 1 wird von einem Druckspannungswandler 4 gemessen und in eine dem Druck proportionales Ist-Wert-Signal umgewandelt. Dieses Ist-Wert-Signal wird einem Vergleicher 5 zugeführt, wo es mit einem Sollwertsignal S verglichen wird. Am Ausgang des Vergleiches 5 erscheint ein der Differenz zwischen Sollwert-Signal und Istwert-Signal proportionales Regelabweichungs-Signal, das einem Regler 6 zugeführt wird. Im Regler 6 wird das Regelabweichungs-Signal entsprechend der Reglercharakteristik zu einem vorzeichenrichtigen Reglerausgangssignal verarbeitet, das jeweils einer Anordnung 7 und 8 zur Erzeugung eines Stellsignals für die Magnetventile 2 und 3 zugeführt wird. Die Anordnungen 7 und 8 sind dabei so ausgebildet, dass sie jeweils nur auf positive oder negative Reglerausgangssignale ansprechen. Die Ausgänge der Anordnungen 7 bzw. 8 sind jeweils mit den Magnetspulen 2' bzw. 3' elektrisch verbunden.

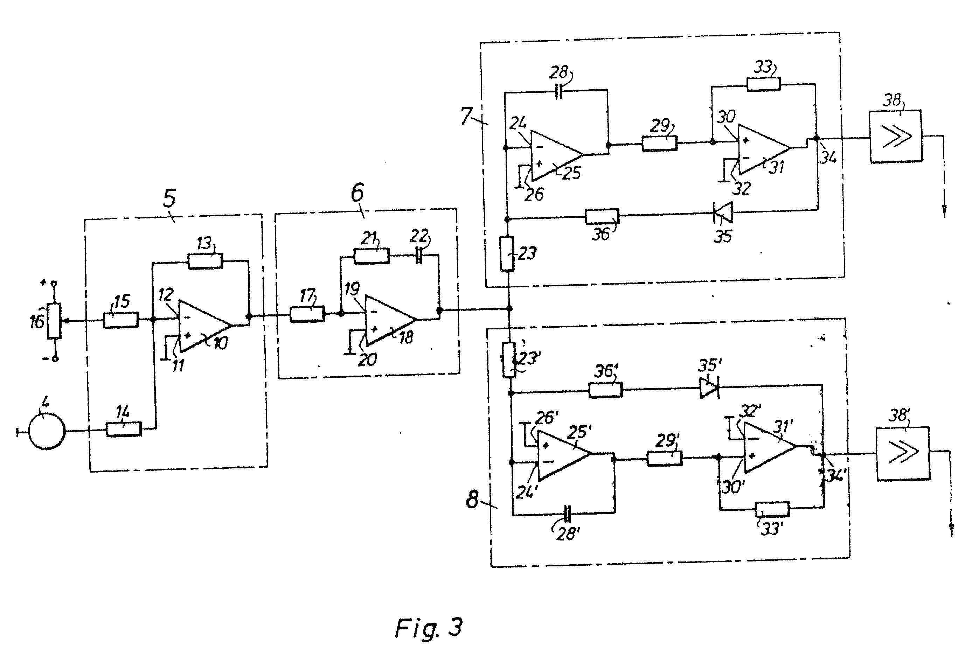

Der Regler 6 besteht vorzugsweise aus einem bekannten PI-Regler. Die Anordnungen 7 und 8 können aus bekannten Gleichspannungs-Treiber-Verstärkern (mit Polaritätsauswahl) bestehen oder aus «Chopper-Verstärkern», die im Zusammenhang mit Fig. 3 erläutert werden.

Fig. 3 zeigt ein detaillierteres Schaltbild einer Ausführungsform der Erfindung, bei dem Chopperverstärker verwendet werden. Gleiche Teile wie in Fig. 2 sind mit gleicher Bezugszeichen versehen.

Der Vergleicher 5 besteht aus einem Operationsverstärker 10, dessen Minus-Eingang 11 mit Masse und dessen Plus-Eingang 12 über einen Rückkopplungswiderstand 13 mit dem Ausgang des Verstärkers 10 verbunden ist. Weiterhin ist der Plus-Eingang 12 über einen Widerstand 14 mit dem Druck-Spannungswandler 4 und einen weiteren Widerstand 15 mit einem Abgriff eines als Sollwertgeber dienenden Verstellwiderstand 16 verbunden, dessen weitere Anschlüsse mit positiver und negativer Versorgungsspannung verbunden sind.

Der Ausgang des Verstärkers 10 ist mit dem Regler 6 verbunden und zwar über einen Widerstand 17 mit einem invertierenden Eingang 19 eines Operationsverstärkers 18, dessen nicht invertierender Eingang 20 mit Masse verbunden ist.

Der Ausgang des Verstärkers 18 ist über eine Serienschaltung aus einem Kondensator 22 und einem Widerstand 21 mit dem invertierenden Eingang 19 verbunden.

Der Ausgang des Verstärkers 18 und damit des Reglers 6 ist mit Eingängen der beiden Anordnungen 7 und 8 verbunden, die mit Ausnahme der Polarität von Dioden 35 und 35' identisch aufgebaut sind.

Die Anordnung 7, die einen Chopper-Verstärker darstellt, besteht aus einem Eingangswiderstand 23, der mit seinem einen Anschluss mit dem Ausgang des Verstärkers 18 und mit seinem anderen Anschluss mit einem invertierenden Eingang 24 eines Verstärkers 25 verbunden ist. Ein nicht-invertierender Eingang 26 des Verstärkers 25 ist mit Masse verbunden. Ein Ausgang 27 des Verstärkers 25 ist über einen Kondensator 28 mit dem Eingang 24 verbunden. Der Ausgang 27 ist über einen Widerstand 29 mit einem nicht-invertierenden Eingang 30 eines Verstärkers 31 verbunden, dessen invertierender Eingang 32 mit Masse verbunden ist. Ein Ausgang 34 des Verstärkers 31 ist über einen Mitkopplungswiderstand 33 mit dem Eingang 30 verbunden. Weiterhin ist der Ausgang 34 über eine Serienschaltung aus einer Diode 35 und einem Widerstand 36 mit dem invertierenden Eingang 24 des Verstärkers 25 verbunden. Die Diode 35 ist so geschaltet, dass sie für einen Stromfluss vom Ausgang 34 zum Eingang 24 in Durchlassrichtung liegt.

Der Ausgang 34 ist über eine Anpassschaltung 38 mit dem Belüftungsmagnetventil verbunden. Diese Anpassschaltung 38 kann z.B. aus einem herkömmlichen Leistungsverstärker bestehen. Die Anordnung 8 ist mit der Anordnung 7 identisch, wobei die gleichen Bezugszeichen, jeweils mit einen Strich versehen, verwendet werden. Lediglich ist gegenüber der Anordnung 7 die Polarität der Diode 35' vertauscht, so dass die Diode 36' vom Ausgang des Verstärkers 31' zum Eingang des Verstärkers 25' in Sperr-Richtung geschaltet ist.

Der Ausgang der Anpass-Schaltung 38' ist entsprechend mit der (nicht dargestellten) Magnetspule 3' des Entlüftungs-Magnetventiles 3 verbunden. Wie nachfolgend gezeigt wird, kann es erforderlich sein, die Anpass-Schaltung 38' invertierend auszubilden.

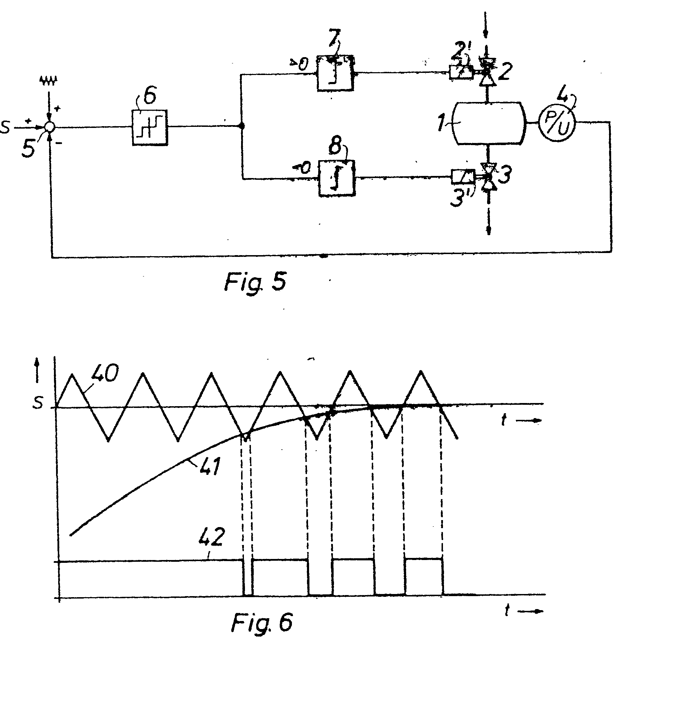

Im folgenden wird die Wirkungsweise der Schaltung nach Fig. 3 unter teilweiser Bezugnahme auf Fig. 4 erläutert.

Es sei angenommen, der von dem Druck-Spannungs-Wandler 4 gemessene Druck im Druckbehälter 1 sei zu hoch, d.h. er liege über dem Sollwert. Damit soll auch am Eingang 12 des Verstärkers 10 eine positive Spannung anliegen. Am Ausgang des (invertierenden) Verstärkers 10 erscheint damit eine negative Spannung, die in dem PI-Regler 6 verstärkt (P-Anteil) und integriert (I-Anteil) wird, so dass am Ausgang des Verstärkers 18 eine nach kurzem, durch den P-Anteil bedingten Sprung linear zu positiven Werten hin ansteigende Spannung ansteht. Diese Spannung liegt parallel an den Eingängen der Anordnungen 7 und 8.

In der Anordnung 8 bewirkt diese positive Spannung in dem (Integrier-)Verstärker 25', dass an dessen Ausgang 27 eine zu negativen Werten hin abfallende Spannung $U_{25'}$ entsteht. Diese Spannung wird in dem Schaltverstärker 31' derart verstärkt, dass er bei Erreichen einer Schwelle voll von positivem zu negativem Ausgangspegel durchschaltet. Der Rückkupplungszweig 35', 36' ist für diese negative Spannung in Durchlassrichtung geschaltet, so dass am Eingang 24' des Verstärkers 25' diese negative Spannung der positiven Spannung vom Ausgang des Reglers 6 überlagert wird, wodurch der Integrierverstärker 25' wieder aufintegriert. Sobald das Ausgangssignal

$U_{25}$, einen Schwellwert erreicht hat, schaltet der hysteresebehaftete Verstärker 31' zu positivem Ausgangspegel zurück. Die Anpasschaltung 38', an deren Eingang während des oben beschriebenen Vorganges ein negativer Impuls lag, ist invertierend ausgebildet, so dass an ihrem Ausgang ein das Entlüftungsmagnetventil steuernder positiver Impuls erschienen ist.

Nach dem Hochschalten des Schaltverstärkers 31' zu positivem Ausgangspegel liegt die Diode 35' in Sperrichtung, so dass das positive Reglerausgangssignal wieder allein zur Wirkung kommt und sich der oben geschilderte Vorgang wiederholt. Die Steilheit der Integration ist, solange die Diode 35' sperrt, durch den Widerstand 23' und den Kondensator 28' bedingt. Sobald der Verstärker 31' umgeschaltet hat und die Diode 35' leitend wird, ist die Integrationskonstante des Verstärkers 25' zusätzlich noch von dem Verhältnis der Widerstände 23' und 36' abhängig. Die Werte der Widerstände 23' und 36' und des Kondensators 28 sind so gewählt, dass die Integration in beiden Richtungen so schnell erfolgt, dass die Frequenz des resultierenden Ausgangssignales höher liegt, als die maximale Schaltfrequenz des nachgeschalteten Magnetventils.

Die oben geschilderten Vorgänge verlaufen in der Anordnung 7 zu Beginn analog, so lange bis der Schaltverstärker 31 zu negativem Pegel durchschaltet. Ab diesem Zeitpunkt ist der Rückkopplungszweig 35, 36 gesperrt, so dass die Anordnung 7 nicht schwingen kann und damit ausser Betrieb ist. Die Anpass-Schaltungen 38 und 38' sind weiterhin so ausgebildet, dass sie nur auf hochfrequente Signale ansprechen, was z.B. durch ein Hochpassfilter oder sonstige bekannte, auf Impulse ansprechende Schaltungen erreicht werden kann.

Betrachtet man nun den Fall, dass der gemessene Druck kleiner als der durch den Sollwert vorgegebene Druck ist, so liegt am Eingang 12 des Verstärkers ein negatives Signal, das analog zu obigem, am Ausgang des Verstärkers 18 ein zu negativen Werten hin abfallendes Signal erzeugt. Dieses Signal bewirkt in dem integrierenden Verstärker 25 ein zu positiven Werten hin ansteigendes Ausgangssignal $U_{25}$, welches in Fig. 4 dargestellt ist. Sobald dieses Signal $U_{25}$ zum Zeitpunkt $t_1$ einen bestimmten Wert erreicht hat, schaltet der Verstärker 31 zu positivem Ausgangspegel (vgl. Kurve $U_{31}$ in Fig. 4) durch.

Die Diode 35 wird damit leitend und der Verstärker integriert vom Zeitpunkt $t_2$ bis $t_3$ ab. Zum Zeitpunkt $t_3$ schaltet der Verstärker 31 zu negativem Ausgangspegel zurück und der Verstärker 25 integriert wieder auf, sofern noch ein Eingangssignal an seinem Eingang 24 ansteht, so dass sich der Vorgang entsprechend wiederholt, wie es durch den weiteren Kurvenverlauf in Fig. 4 angedeutet ist.

Wie aus Fig. 4 ersichtlich, ist die Einschaltdauer des Verstärkers 31 und damit die Impulsdauer für das Einlassmagnetventil (neben dem Wert des Ausgangssignales des Reglers 6) von der Zeitkonstante der Abintegration und damit von den Widerständen 23 und 36 und dem Kondensator 28 und weiterhin von den Schaltschwellen des Verstärkers 31 und damit von den Widerständen 29 und 33 abhängig. Die Ausschaltdauer des Verstärkers 31 ist dagegen nicht von dem Wert des Widerstandes 36 abhängig.

In Fig. 5 ist ein weiteres Ausführungsbeispiel der Erfindung dargestellt. Gleiche Teile wie in Fig. 2 sind mit gleichen Bezugszeichen versehen.

Der Druckbehälter 1, die Magnetventile 2 und 3 mit ihren zugehörigen Magnetspulen 2' und 3', der Druck-Spannungs-Wandler 4, der Vergleicher 5, der Regler 6 und die Anordnungen 7 und 8 sind in gleicher Weise wie in Fig. 2 miteinander verbunden.

Zusätzlich wird jedoch dem Vergleicher 5 noch ein hochfrequentes Wechselspannungssignal zugeführt, welches dem Sollwert S überlagert wird. Dieses Wechselspannungssignal kann sinusförmig, impulsförmig oder – wie in Fig. 5 und 6 dargestellt – dreieckförmig sein.

Der Regler 6 besteht aus einem Schaltverstärker mit vorgegebener Hysterese und die Anordnungen 7 und 8 bestehen aus Schaltverstärkern, wobei der eine Verstärker hiervon (z.B. 7) nur auf positive und der andere (z.B. 8) nur auf negative Signale anspricht.

Die Wirkungsweise dieser Regeleinrichtung wird im Zusammenhang mit Fig. 6 erläutert.

Hierbei zeigt die mit 40 bezeichnete Kurve die dem Sollwert S überlagerte Wechselspannung, die Kurve 41 eine dem Ist-Wert des Druckes proportionale Spannung (Ausgangssignal des Druck-Spannungswandlers 4) und die Kurve 42 die Öffnungscharakteristik des Einlassventiles 2.

Es ist ersichtlich, dass bei Annäherung des Istwertes an den Sollwert durch die überlagerte Sägezahnspannung bzw. Dreieckspannung eine Puls-Breitenmodulation für die Magnetventilansteuerung erreicht wird. Das Tastverhältnis (Einschaltdauer zu Periodendauer) verändert sich bei Vernachlässigung der Reglerhysterese von 1 bei grossen Abweichungen bis auf 0,5 bei Regelabweichung Null.

Bei Regelabweichung mit umgekehrtem Vorzeichen sperrt die Anordnung 7 und das Tastverhältnis wird zu Null.

Hiermit wird erreicht, dass die Magnete bei kleinen Regelabweichungen proportional zur Abweichung öffnen bzw. schliessen. Es wird somit ein langsameres Einlaufen des Istwertes in den Sollwert erreicht, wodurch die Regelhysterese verkleinert und damit die Regelgenauigkeit vergrössert werden kann.

Auch hier kann die Frequenz des dem Sollwert überlagerten Wechselspannungssignales höher als die maximale Betätigungsfrequenz des angesteuerten Magnetventiles.

**Patentansprüche**

1. Bremsdruckregler für pneumatische Bremsen von Fahrzeugen, insbesondere von Schienenfahrzeugen, mit mindestens einem elektrisch betätigbaren Magnetventil (2, 3), einem Druck-Spannungswandler (4), der ein dem zu regelnden Bremsdruck proportionales Ist-Wert-Signal erzeugt, einem Druck-Sollwertgeber (S; 16), einem Vergleicher (5) zur Erzeugung eines Regelabweichungssignales zwischen dem Ist-Wert-Signal und einem Soll-Wert-Signal, einem mit dem Vergleicher verbundenen Regler (6) und einer Anordnung (7; 8) zur Erzeugung eines Stellsignales für das Magnetventil, dadurch gekennzeichnet, dass die Anordnung (7; 8) zur Erzeugung des Stellsignales das Magnetventil (2, 3) so ansteuert, dass dessen Ventilstössel innerhalb eines bestimmten Bereiches zwischen vollständigem Öffnen und vollständigem Schliessen des Magnetventiles Zwischenstellungen einnimmt, die kontinuierlich und über eine beliebig lange Zeitdauer einstellbar sind.

2. Bremsdruckregler nach Anspruch 1, dadurch gekennzeichnet, dass das Stellsignal eine einem Ausgangssignal des Reglers proportionale, kontinuierlich veränderbare Gleichspannung ist.

3. Bremsdruckregler nach Anspruch 1, dadurch gekennzeichnet, dass das Stellsignal eine impulsförmige Spannung ist, deren Frequenz über der maximalen Betätigungsfrequenz des Magnetventiles liegt.

4. Bremsdruckregler nach Anspruch 3, dadurch gekennzeichnet, dass die impulsförmige Spannung eine Rechteckspannung vorgegebener Amplitude ist, deren Frequenz und/oder Tastverhältnis in einem vorgegebenen Bereich kontinuierlich veränderbar sind.

5. Bremsdruckregler nach den Ansprüchen 1, 3 und 4, dadurch gekennzeichnet, dass das Soll-Wert-Signal innerhalb eines vorgegebenen Bereiches um einen einstellbaren Mittelwert sägezahnförmig veränderbar ist, wobei die Frequenz des Soll-Wert-Signales über der maximalen Betätigungsfrequenz des Magnetventiles liegt.

6. Bremsdruckregler nach Anspruch 1 bis 5, dadurch gekennzeichnet, dass der Regler (6) einen Integralanteil enthält.

7. Bremsdruckregler nach Anspruch 6, dadurch gekennzeichnet, dass der Regler (6) ein Proportional-Integral-Regler (PI-Regler) ist.

8. Bremsdruckregler nach Anspruch 1–7, dadurch gekennzeichnet, dass ein Einlass- (2) und ein Auslassmagnetventil (3) vorgesehen sind und dass der Regler (6) in Abhängigkeit des Vorzeichens des Regelabweichungssignales getrennte Stellsignale für das Einlass- und das Auslassmagnetventil erzeugt.

9. Bremsdruckregler nach Anspruch 8, dadurch gekennzeichnet, dass die Schalthysterese des Bremsdruckreglers so gewählt ist, dass eine gleichzeitige Betätigung des Einlass- und des Auslassmagnetventiles ausgeschlossen ist, wobei die Schalthysterese auch Null sein kann.

10. Bremsdruckregler nach Anspruch 3–9, dadurch gekennzeichnet, dass zwischen den Regler (6) und jedes Magnetventil (2, 3) ein Chopper-Verstärker (7, 8) geschaltet ist, dessen Ausgangsfrequenz und/oder Ausgangstastverhältnis dem Reglerausgangssignal derart entspricht, dass der arithmetische Mittelwert des Chopper-Verstärker-

9 0 014 369 10

Ausgangssignales dem Reglerausgangssignal proportional ist.

11. Bremsdruckregler nach Anspruch 10, dadurch gekennzeichnet, dass der Chopper-Verstärker (7, 8) aus folgender Anordnung besteht: einem ersten und einem zweiten Operationsverstärker (25 und 31), einem Rückkopplungskondensator (28) für den ersten Operationsverstärker (25), einem Rückkopplungswiderstand (33) für den zweiten Operationsverstärker (31), jeweils einem Vorwiderstand (23 bzw. 29) für den ersten bzw. zweiten Operationsverstärker, wobei der Vorwiderstand (23) des ersten Operationsverstärkers (25) und der Ausgang des Reglers (6) und des Vorwiderstandes (29) des zweiten Operationsverstärkers (31) und der Ausgang des ersten Operationsverstärkers (25) verbunden sind, und schliesslich aus einer Reihenschaltung aus einem Widerstand (36) und einer Diode (35), die mit dem Ausgang des zweiten Operationsverstärkers (31) und dem Eingang des ersten Operationsverstärkers (25) verbunden ist, wobei die Diode (35) in Abhängigkeit des nachgeschalteten Einlass- oder Auslassmagnetventils (2, 3) in Rückkopplungsrichtung in Durchlass- oder Sperrrichtung geschaltet ist.

12. Bremsdruckregler nach einem oder mehreren der vorhergehenden Ansprüche, dadurch gekennzeichnet, dass der Druck-Spannungswandler (4) positive und negative Ist-Wert-Signale erzeugt und dass am Sollwertgeber (14) ebenfalls positive und negative Sollwertsignale einstellbar sind.

**Revendications**

1. Régulateur de la pression de freinage pour des freins pneumatiques de véhicules, plus particulièrement de véhicules sur rails, du type comportant au moins une électrovanne (2, 3) commandée par voie électrique, un transducteur pression-tension (4) produisant un signal de valeur instantanée qui est proportionnel à la pression de freinage qui est à régler, un générateur de valeur de consigne de la pression (S; 16) un comparateur (5) pour fournir un signal d'écart de réglage entre le signal de la valeur instantanée et un signal de la valeur de consigne, un régulateur (6) relié au comparateur et un dispositif (7; 8) pour produire un signal de réglage pour l'électrovanne, caractérisé par le fait que le dispositif (7; 8) servant à produire le signal de réglage commande l'électrovanne (2, 3) de telle manière que la tige de sa soupape assume, dans une plage déterminée entre l'ouverture totale et la fermeture totale de l'électrovanne, des positions intermédiaires qui sont réglables de façon continue et sur une durée de longueur quelconque.

2. Régulateur de la pression de freinage selon la revendication 1, caractérisé par le fait que le signal de réglage est une tension continue qui est proportionnelle au signal de sortie du régulateur et qui est susceptible d'être modifiée de façon continue.

3. Régulateur de la pression de freinage selon la revendication 1, caractérisé par le fait que le signal de réglage est une tension impulsionnelle dont la fréquence se situe au-delà de la fréquence de commande maximale de l'électrovanne.

4. Régulateur de la pression de freinage selon la revendication 3, caractérisé par le fait que la tension impulsionnelle est une tension rectangulaire d'amplitude donnée à l'avance, et dont la fréquence et/ou le taux d'impulsions sont susceptibles d'être modifiés de façon continue dans une plage prédéterminée.

5. Régulateur de la pression de freinage selon les revendications 1, 3 et 4, caractérisé par le fait que le signal de valeur de consigne est susceptible d'être modifié en forme de dents de scie à l'intérieur d'une plage prédéterminée, autour d'une valeur médiane réglable, la fréquence du signal de valeur de consigne se situant au-delà de la fréquence de commande maximale de l'électrovanne.

6. Régulateur de la pression de freinage selon les revendications 1 à 5, caractérisé par le fait que le régulateur (6) comporte une partie intégrale.

7. Régulateur de la pression de freinage selon la revendication 6, caractérisé par le fait que le régulateur est un régulateur proportionnel-intégral (régulateur PI).

8. Régulateur de la pression de freinage selon la revendication 1–7, caractérisé par le fait qu'il est prévu une électrovanne d'admission (2) et une électrovanne d'évacuation (3), et que le régulateur (6) produit, en fonction du signe du signal de l'écart de réglage, des signaux de commande pour l'électrovanne d'admission et d'évacuation.

9. Régulateur de la pression de freinage selon la revendication 8, caractérisé par le fait que l'hystérèse de commutation du régulateur de la pression de freinage est choisie de telle façon qu'une commande simultanée de l'électrovanne d'admission et d'évacuation est exclue, hystérèse de commutation pouvant également être nulle.

10. Régulateur de la pression de freinage selon la revendication 3–9, caractérisé par le fait qu'entre le régulateur (6) et chaque électrovanne (2, 3) est monté un amplificateur-découpeur (7, 8) dont la fréquence de sortie et/ou le rapport cyclique de sortie correspond de telle façon au signal de sortie du régulateur que la valeur moyenne arithmétique du signal de sortie de l'amplificateur-découpeur est proportionnelle au signal de sortie du régulateur.

11. Régulateur de la pression de freinage selon la revendication 10, caractérisé par le fait que l'amplificateur-découpeur (7, 8) est constitué par le dispositif suivant: un premier et un second amplificateurs opérationnels (25 et 31), un condensateur de réaction (28) pour le premier amplificateur opérationnel (25), une résistance de réaction (33) pour le second amplificateur opérationnel (31), une résistance amont (23, 29) pour chacun des premier et second amplificateurs opérationnels, la résistance amont (23) du premier amplificateur opérationnel (25) et la sortie du régulateur (6) et de la résistance amont (29) du second amplificateur opérationnel (31) et la sortie du premier amplificateur opérationnel (25) étant reliées, et finalement par un montage série constitué par une résistance (36) et par une diode (35) qui est reliée à la sortie du second amplificateur opérationnel (31) et à l'entrée du premier amplificateur opérationnel (25), la diode (35) étant montée en direction passante ou de blocage dans la direction de réaction, en fonction de l'électrovanne aval d'admission d'évacuation (2, 3).

12. Régulateur de la pression de freinage selon l'une ou plusieurs des revendications précédentes, caractérisé par le fait que le transducteur pressiontension (4) produit des signaux de valeur instantanée positifs et négatifs et qu'au niveau du générateur de valeur de consigne (14) sont susceptibles d'être réglés également des signaux de valeur de consigne positifs et négatifs.

**Claims**

1. Brake pressure regulator for pneumatic brakes of vehicles, particularly of rolling stock, with at least one electrically operable solenoid valve (2, 3), a compressive stress transformer (4), which produces an actual-value signal proportional to the brake pressure to be regulated, a desired pressure value transmitter (S; 16), a comparator (5) for producing a deviation signal between the actual-value signal and a desired-value signal, a regulator (6) connected to the comparator and an arrangement (7, 8) for producing an adjusting signal for the solenoid valve, characterised in that the arrangement (7, 8) for producing the adjusting signal controls the solenoid valve (2, 3) in such a way that its valve tappet adopts intermediate positions between the completely open and completely closed states of the solenoid valve within a certain area, which positions are continuously adjustable over as long a time as desired.

**Claims**

1. Brake pressure regulator for pneumatic brakes of vehicles, particularly of rolling stock, with at least one electrically operable solenoid valve (2, 3), a compressive stress transformer (4), which produces an actual-value signal proportional to the brake pressure to be regulated, a desired pressure value transmitter (S; 16), a comparator (5) for producing a deviation signal between the actual-value signal and a desired-value signal, a regulator (6) connected to the comparator and an arrangement (7, 8) for producing an adjusting signal for the solenoid valve, characterised in that the arrangement (7, 8) for producing the adjusting signal controls the solenoid valve (2, 3) in such a way that its valve tappet adopts intermediate positions between the completely open and completely closed states of the solenoid valve within a certain area, which positions are continuously adjustable over as long a time as desired.

2. Brake pressure regulator according to claim 1, characterised in that the adjusting signal is a continuously changeable direct voltage proportional to an output signal of the regulator.

3. Brake pressure regulator according to claim 1, characterised in that the adjusting signal is a pulse-shaped voltage, whose frequency lies above the maximum operating frequency of the solenoid valve.

4. Brake pressure regulator according to claim 3, characterised in that the pulse-shaped voltage is a square-wave voltage of a predetermined amplitude, whose frequency and/or keying ratio are continuously changeable in a predetermined area.

5. Brake pressure regulator according to claims 1, 3 and 4, characterised in that the desired-value signal is changeable in the shape of a saw-tooth for an adjustable mean value within a predetermined area, whereby the frequency of the desired-value signal lies above the maximum operating frequency of the solenoid valve.

6. Brake pressure regulator according to claims 1 to 5, characterised in that the regulator (6) comprises an integral part.

7. Brake pressure regulator according to claim 6, characterised in that the regulator (6) is a proportional-integral-regulator (PI-regulator).

8. Brake pressure regulator according to claims 1 to 7, characterised in that an inlet (2) and an outlet solenoid valve (3) are provided, and in that the regulator (6) produces separate adjusting signals for the inlet and outlet solenoid valves in dependence on the sign of the deviation signal.

9. Brake pressure regulator according to claim 8, characterised in that the overlap of the brake pressure regulator is selected in such a way that simultaneous operation of the inlet and the outlet solenoid valves is ruled out, whereby the overlap can also be zero.

10. Brake pressure regulator according to claims 3 to 9, characterised in that inserted between the regulator (6) and each solenoid valve (2, 3) is a chopper amplifier (7, 8), whose output frequency and/or output keying ratio corresponds to the regulator output signal in such a way that the arithmetical mean value of the chopper-amplifier-output signal is proportional to the regulator output signal.

11. Brake pressure regulator according to claim 10, characterised in that the chopper-amplifier (7, 8) consists of the following arrangement:
A first and a second operation amplifier (25 and 31), a reaction capacitor (28) for the first operation amplifier (25), a reaction resistance (33) for the second operation amplifier (31), one respective preresistance (23, respectively 29) for the first or second operation amplifier, whereby the preresistance (23) of the first operation amplifier (25) and the output of the regulator (6) and of the preresistance (29) of the second operation amplifier (31) and the output of the first operation amplifier (25) are connected, and finally of a series circuit of a resistance (36) and a diode (35), which is connected to the output of the second operation amplifier (31) and the input of the first operation amplifier (25), whereby the diode (35) is inserted in a reaction direction in a flow direction of a blocking direction in dependence on the subsequently connected inlet or outlet solenoid valve (2, 3).

12. Brake pressure regulator according to one or several of the above claims, characterised in that the compressive stress transformer (4) produces positive and negative actual-value signals and in that positive and negative desired-value signals are likewise adjustable on the desired-value transmitter (14.

$U_{25'}$

$t_0$    $t_1$    $t_2$

$t$

$U_{31'}$

$t$

*Fig. 4*

$V$

100%

100%

$U_v / U_{v max}$

*Fig. 1*

*Fig. 2*

Fig. 3

Fig. 5

Fig. 6